Europäisches Patentamt

European Patent Office

Office européen des brevets

(19)

(11) Publication number: **0 163 341**
**B1**

(12) **EUROPEAN PATENT SPECIFICATION**

(45) Date of publication of patent specification: **20.04.88**

(51) Int. Cl.⁴: **A 01 G 25/09**

(21) Application number: **85200712.9**

(22) Date of filing: **07.05.85**

(54) Sprayer for a sprinkling installation.

(30) Priority: **08.05.84 NL 8401465**

(43) Date of publication of application:
**04.12.85 Bulletin 85/49**

(45) Publication of the grant of the patent:
**20.04.88 Bulletin 88/16**

(84) Designated Contracting States:
**BE DE FR GB NL**

(56) References cited:
**GB-A-1 522 037**

(73) Proprietor: **Waterkracht B.V.**
**Breukelaarweg 35**
**NL-7051 DW Varsseveld (NL)**

(72) Inventor: **Kreeftenberg, Hendrik Willem**
**Burgemeester van Tuyllstraat 1**
**Varsseveld (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# Description

This invention relates to a sprayer for a sprinkling installation, comprising a base or frame, a water supply pipe by means of which the sprayer is rotatably connected to a collapsible water supply tube or hose of the installation, and means for moving the sprayer between an operative position in which the axis of the sprayer is normal to a plane containing the axis of the hose and the axis of the pipe and an inoperative position in which said axes are parallel to each other.

Such a sprayer construction has the advantage that, as a result of the sprayers being rotatable, the hose can be wound on a reel without removing the sprayers.

Such a construction is known from GB—A—1,522,037. In this known device, the means for moving the sprayer between the positions referred to consist of a pin mounted on the rotatable part of the water supply pipe for cooperation with a curved slot formed in the fixed part. Consequently, in this prior device, the performance of the rotary movement contemplated also requires an axial displacement of the rotary part relative to the fixed part of the sprayer supplied pipe. Not only do these movements require substantial forces, but in addition, as a result for example of fouling or damage, problems are prone to occur in the cooperation between the pin and the slot.

It is an object of the present invention to remove the disadvantages referred to.

To this effect, according to the present invention, a sprayer of the kind defined in the opening paragraph hereof is characterized in that said means comprise an eccentric disk mounted on the rotatable part of the water supply pipe and operable by a lever which, in operation, is under the influence of the water supply in the collapsible water supply tube or hose. Since, when water is supplied, the tube or hose will assume a prismatic shape, the sprayer will automatically be rotated.

In a further elaboration of the invention, the end of the lever remote from the eccentric disk is provided with a portion extending across the hose or tube and equipped with a rotatable roller.

Although it has been found that, as the tube or hose is wound on the reel, the sprayer automatically turns into its starting position, it may be recommendable, in certain cases, to provide the lever with at least one spring, which ensures that after the removal of the pressure in the water supply tube or hose, the sprayer is automatically returned to its starting position.

One embodiment of the invention will now be described with reference to the accompanying drawings, in which

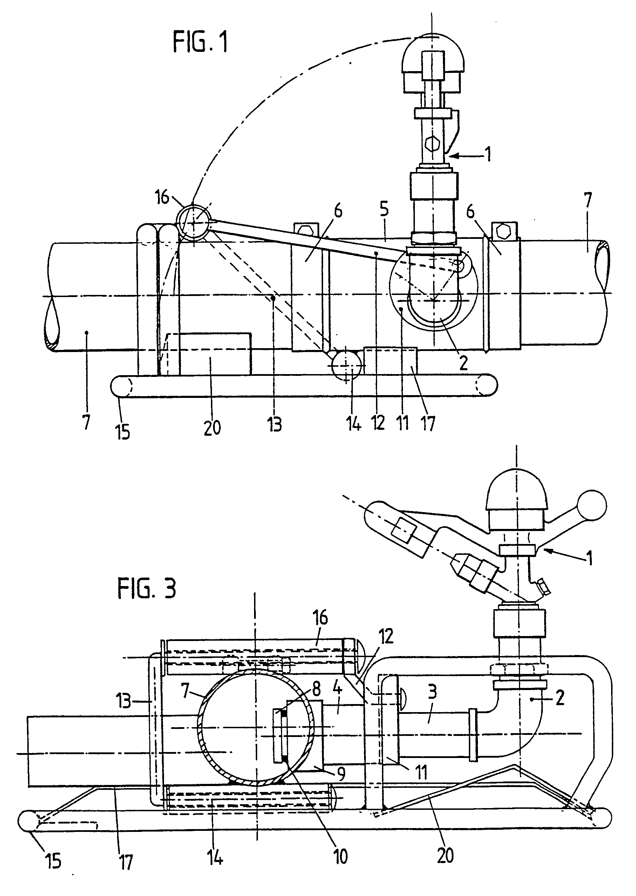

Fig. 1 shows a side-elevational view of the apparatus according to the present invention;

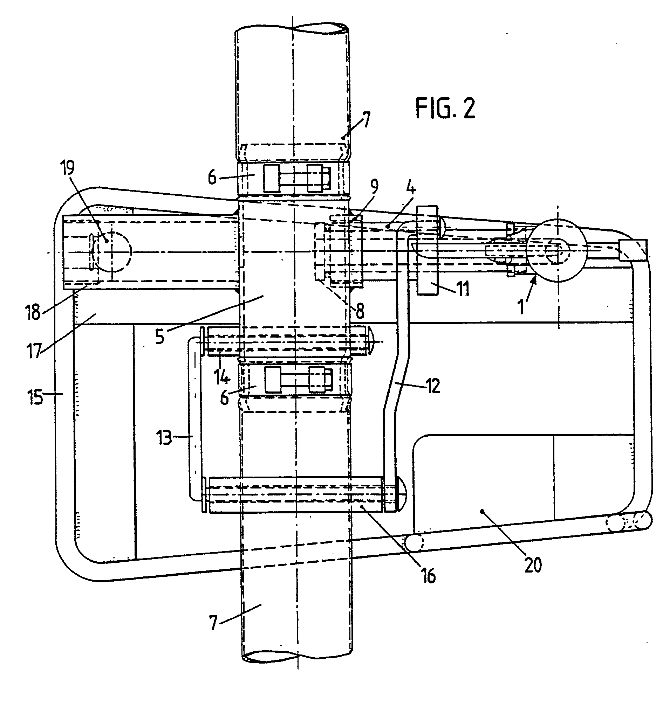

Fig. 2 shows a top view of the apparatus of Fig. 1; and

Fig. 3 shows a front elevational view of the apparatus shown in Fig. 2.

Referring to the drawings, which show the apparatus in the operative position, a sprayer for a sprinkling installation, equipped with a base or frame 15, includes a sprayer body 1 that is known per se (see e.g. NL—A—7414971). This sprayer body is connected by means of a bend 2 to a supply pipe 3.

The end of supply pipe 3 remote from bend 2 extends through a guide member 4 mounted with screwthread in a collar 9 welded in the wall of a coupling member 5 which by means of hose clamps 6, shown in the example illustrated, is integrated in a water supply hose 7.

As shown in the drawings, see in particular Fig. 3, the supply pipe 3 is retained in guide member 4 by means of, on the one hand, a sealing ring 10 arranged between a collar 8 of supply pipe 3 and collar 9 in which guide member 4 is mounted, and on the other hand, a disk 11 fixedly connected to supply pipe 3. Engaging the disk eccentrically is a lever 12, the other end of which is rotatably connected to a U-shaped strap 13. The end of strap 13 remote from lever 12 extends into a sleeve 14 connected fixedly to a frame 15 of the device.

As further aparent from the drawings, the portion of the U-shaped strap 13 connected to lever 12 rests on water supply tube 7 by means of a freely rotatable roller 16 mounted on it.

As further shown in the drawings, coupling member 5 is also connected to frame 15 by means of a supporting strip 17. In a similar manner, other parts may also be welded to the frame, with or without the aid of supporting strips.

Connected further to coupling member 5 is a, known per se, automatic water drain 18 provided with a ball valve 19, whereby it is ensured that when the pressure in the water supply tube falls out, the water will be removed from it automatically.

Welded to frame 15 is further a supporting plate 20, on which the sprayer body 1 can rest in the inoperative position, by virtue of which the body 1 is "enclosed" within the circumference of the frame, so that it cannot be damaged.

Naturally, a large number of modifications are possible without departing from the scope of the inventive idea. Thus, for example, a spring may be provided to engage the portion of the U-shaped strap 13 that extends within roller 16, and to urge the strap and hence lever 12 to a position with a collapsed sprayer.

# Claims

1. A sprayer (1) for a sprinkling installation, comprising a base or frame (15), a water supply pipe (3, 4) by means of which the sprayer is rotatably connected to a collapsible water supply tube or hose (7) of the installation, and means (11, 12, 13) for moving the sprayer between an operative position in which the axis of the sprayer (1) is normal to a plane containing the axis of the hose (7) and the axis of the pipe (3, 4) and an inoperative position in which said axes are parallel to each other, characterized in that said means (11, 12, 13) comprise an eccentric disk (11) mounted on the rotatable part (3) of the water supply pipe (3, 4) and operable by a lever (12, 13) which, in operation, is under the influence of the water supply in the collapsible water supply tube or hose (7).

2. A sprayer as claimed in claim 1, characterized in that the end of the lever (12) remote from the eccentric disk (11) is provided with a portion (13) extending across the hose or tube (7) and equipped with a rotatable roller (16).

3. A sprayer as claimed in claim 1 or 2, characterized in that the frame (15) comprises a curved supporting plate (20) on which the sprayer body (1) can rest in the inoperative position.

4. A sprayer as claimed in claim 1, 2 or 3, characterized in that the lever (12) is provided with at least one spring.

## Patentansprüche

1. Sprenger (1) für Beregnungsanlage, umfassend eine Grundplatte oder Rahmen (15), ein Wasserzuführungsrohr (3, 4), durch welches der Sprenger drehbar verbunden ist mit einem klappbaren Wasserzuführungsrohr oder Schlauch (7) der Installation und Mitteln (11, 12, 13) für die Bewegung des Sprengers zwischen einer Arbeitsstellung, in der sich die Achse des Sprengers (1) senkrecht zu einer Ebene befindet, die durch die Achse des Schlauches (7) und die Achse des Rohres (3, 4) gebildet wird, und einer Ruhestellung, in der die genannten Achsen parallel zueinander sind, dadurch gekennzeichnet, dass die genannten Mittel (11, 12, 13) eine exzentrische Scheibe (11) umfassen, die in dem drehbaren Teil (3) des Wasserzuführungsrohres (3, 4) eingebaut ist und durch einen Hebel (12, 13) bedienbar ist, der in Betrieb durch die Wasserzuführung in dem klappbaren Wasserzuführungsrohr oder Schlauch (7) beeinflusst wird.

2. Sprenger nach Anspruch 1, dadurch gekennzeichnet, dass das von der exzentrischen Scheibe (11) ferner liegende Ende des Hebels (12) mit einem Teil (13) versehen ist, das sich quer zum Schlauch oder Rohr (7) erstreckt und mit einer drehbaren Rolle (16) ausgerüstet ist.

3. Sprenger nach Anspruch 1 oder 2, dadurch gekennzeichnet, dass der Rahmen (15) ein gebogenes Stützblech (20) umfasst, auf welchem der Sprengerkörper (1) in Ruhestellung aufliegen kann.

4. Sprenger nach Anspruch 1, 2 oder 3, dadurch gekennzeichnet, dass der Hebel (12) mit wenigstens einer Feder ausgestattet ist.

## Revendications

1. Arroseur (1) pour installation d'irrigation comprenant une base ou bâti (15), un tuyau d'alimentation en eau (3, 4) au moyen duquel l'arroseur est relié de façon rotative à un conduit pliant d'alimentation en eau (7) de l'installation et des moyens (11, 12, 13) pour déplacer l'arroseur entre une position opérationnelle dans laquelle l'axe de l'arroseur (1) est normal à un plan contenant l'axe du conduit (7) et l'axe du tuyau (3, 4) et une position non-opérationnelle dans laquelle lesdits axes sont parallèles l'un avec l'autre, caractérisé en ce que lesdits moyens (11, 12, 13) comprennent un disque excentrique (11) monté sur la partie tournante (3) du tuyau d'alimentation en eau (3, 4) et actionné par un levier (12, 13) qui, en fonctionnement est sous l'influence de l'alimentation en eau dans le conduit pliant (7) d'alimentation en eau.

2. Arroseur conforme à la revendication 1, caractérisé en ce que l'extrémité du levier (12) distante du disque excentré (11) est pourvue d'une partie (13) s'étendant sur le conduit (7) et est équipée d'une roue tournante (16).

3. Arroseur conforme aux revendications 1 ou 2 caractérisé en ce que le bâti (15) comprend une plaque support incurvée (20) sur laquelle le corps de l'arroseur (1) peut reposer quand il n'est pas en position opérationnelle.

4. Arroseur conforme aux revendications 1, 2 ou 3 caractérisé en ce que le levier (12) est pourvu d'au moins un ressort.

FIG. 1

FIG. 3

FIG. 2